(19) Europäisches Patentamt
European Patent Office
Office européen des brevets

(11) **EP 4 686 559 A1**

(12) **EUROPEAN PATENT APPLICATION**

(43) Date of publication:
**04.02.2026 Bulletin 2026/06**

(21) Application number: **24192745.8**

(22) Date of filing: **02.08.2024**

(51) International Patent Classification (IPC):
**B32B 5/02** (2006.01)  **B32B 5/08** (2006.01)
**B32B 25/02** (2006.01)  **B32B 25/10** (2006.01)
**B32B 25/14** (2006.01)  **B60R 13/01** (2006.01)
**B60R 13/02** (2006.01)  **B60R 13/08** (2006.01)
**B60N 3/04** (2006.01)

(52) Cooperative Patent Classification (CPC):
**B32B 25/10; B32B 5/022; B32B 5/08; B32B 25/02;
B32B 25/14; B60N 3/048; B60R 13/08;
G10K 11/168;** B32B 2262/0284; B32B 2262/12;
B32B 2262/128; B32B 2262/16; B32B 2307/102;
B32B 2605/003; B32B 2605/08

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Autoneum Management AG
8406 Winterthur (CH)**

(72) Inventors:
• **GOTTARDO, Laure
  Kyburg (CH)**
• **GERGES, Youssef
  Winterthur (CH)**
• **PAÙ-LESSI, Beniamino
  Winterthur (CH)**

(54) **AUTOMOTIVE SOUND INSULATING TRIM COMPONENT**

(57) An automotive sound-insulating trim component having spring-mass characteristics comprising a porous fibrous spring layer and a mass layer laminated together, wherein the porous fibrous spring layer has an Air Flow Resistivity lower than 7500Ns/m$^4$ and a Damping Loss Factor equal to or higher than 0.15.

**Figure 3**

EP 4 686 559 A1

## Description

## Technical Field

The present invention relates to the field of automotive sound insulating trim components.

## Background Art

When a vehicle is in operation, the vehicle body panels surrounding the passenger compartment may vibrate and radiate noise towards its interior. The vibration of vehicle body panels may result from a direct or indirect structural connection to a source of vibrations in the vehicle, in which case the vibration -as well as the noise deriving from it- is said to be of a structure-borne nature. The vibration of the vehicle body panels may also be induced by an acoustic field impinging on the panels and radiated by a source of noise in the vehicle, in which case the vibration -as well as the noise deriving from it- is said to be of an air-borne nature.

In a vehicle, the major vibration and noise sources, both for structure-borne and for airborne noise and vibration, are represented by the tires and the powertrain. For these sources and for typical vehicle body panels, structure-borne vibrations and noise typically dominate the mid-low frequency range up to about 600Hz, while air-borne vibrations and noise typically dominate the high frequency range above about 1kHz. In the mid-frequency range between about 600Hz and 1kHz both air-borne and structure-borne vibrations and noise play a role.

Sound-insulating trim components are well known and widely used in the automotive industry to reduce the noise radiated by vehicle body panels towards the interior of the passenger compartment and enhance the passengers' acoustic comfort. An example is represented by the floor insulator, i.e., the trim component typically laid on and covering the panels of the vehicle body floor, which are particularly affected by the vibrations and the noise generated by the vehicle's tires. Another example is the dash insulator, i.e. the trim component typically laid on and covering the firewall panel of the vehicle body, a panel which is particularly affected by the vibrations and the noise generated by the powertrain.

Among sound-insulating trim components, those of the spring-mass type have been widely used in the automotive industry for decades. These sound-insulating trim components typically comprise a first layer and a second layer laminated together, wherein the first layer is indicated as "spring layer" or "decoupling layer" or "decoupler" and the second layer is indicated as "mass layer". Both the decoupling layer and the mass layer may, in turn, consist of two or more layers of materials. The "decoupling layer" has one side in contact with one or more panels of the vehicle body. The mass layer is generally laminated directly onto the other side of the decoupling layer and is thus in contact with it. The side of the mass layer opposite the one in contact with the decoupling layer typically faces directly the passenger compartment.

The decoupling layer is purposefully designed to reduce as much as possible the transmission of vibrations from vehicle panels to the mass layer, so that the mass layer vibrates substantially less than the vehicle panels and thus radiates considerably less noise towards the interior of the passenger compartment compared to the noise that would be radiated by the vehicle panel if the sound insulating trim component were not there.

The principle is the same of a spring-mass vibration isolator, wherein the "spring" is the decoupling layer and the "mass" is represented by the mass layer, i.e. the layer or layers laminated onto the decoupling layer, on the side opposite the one in contact with the vehicle panel or panels.

However, in a way similar to any spring-mass vibration isolator, a sound-insulating trim component with spring-mass characteristics is successful in attenuating noise according to the above-described principle only well above the so-called spring-mass resonance. At the spring mass resonance, the decoupling layer may actually amplify vibration and the mass layer may vibrate even more than the vehicle panels. Spring-mass resonances of typical sound-insulating automotive trim components lie in the low frequency range, dominated by structure-borne noise and vibration.

A great variety of sound-insulating trim parts with spring-mass characteristics may be found in the state-of-the-art. These may be best described by looking at how the mass-layer and the spring-layer are realized.

As far as the mass layer is concerned, this traditionally may consist of an acoustic barrier layer made of an elastomeric polymeric material, such as Ethylene Vinyl Acetate (EVA) or Ethylene Propylene Diene Monomer (EPDM), possibly with the addition of some mineral filler to increase density.

However, in state-of-the-art sound-insulating trim parts with spring-mass characteristics the mass layer may also consist of and/or comprise other materials and in particular, it may also consist of more than one layer. For example, EP2159786 discloses a sound-insulating trim component of the spring-mass type wherein the mass layer comprises an impervious film, a fibrous layer and a non-woven fabric, all laminated together.

As far as materials for the the decoupling layer are concerned, the most common choices in the automotive field are open cell foams, in particular polyurethane (PU) foams, and porous fibrous materials. For example, the above-mentioned EP2159786 discloses both open-cell foams and porous fibrous materials as possible embodiments for the spring-layer.

Due to their basic characteristics, porous fibrous materials generally appear to be preferable over PU foams as decouplers in sound-insulating components of the spring-mass type: they have typically a lower dynamic Young's modulus compared to PU foams used in automotive parts and, therefore, they provide a better sound insulation above the spring-mass resonance. Furthermore, they are preferable also in terms of environmental sustainability since porous fibrous materials may be much more easily recycled compared to PU-foams.

In spite of this, many car manufacturers make use of PU foam decouplers in their sound-insulating components of the spring-mass type, because such decouplers typically offer a better sound-insulating performance in the low frequencies, in particular at the spring-mass resonance. Such preference may be accorded, for example, by car manufacturers who are forced by the circumstances to prioritize sound-insulation in the low frequency, e.g. because the structure-borne noise due to the vibration of the tires and/or of the powertrain turns out to be particularly annoying for the passengers.

However, even for these car manufacturers, the use of a PU-foam decoupler to improve sound-insulation performance at low frequencies and in particular in the region of the spring-mass resonance represents an unwanted trade-off, since it comes at the price of a deterioration of the sound-insulation performance at higher frequencies and of a much worse environmental sustainability.

Thus, there is a need in the automotive industry of a sound-insulating trim part with spring-mass characteristics which combines the advantages provided by decoupling layers comprising fibrous nonwovens with those provided by decoupling layers comprising open cell foams, in particular PU-foams, thereby overcoming the above-described disadvantages of spring-mass systems belonging to the prior art. This is the object of the present invention.

## Summary of invention

The object of the invention is achieved by an automotive sound-insulating trim component according to claim 1.

In its main aspect, the invention concerns an automotive sound-insulating trim component with spring-mass characteristics comprising a porous fibrous spring layer and a mass layer laminated together, wherein the Air Flow Resistivity (AFR) of said porous fibrous spring layer is less than $7500Ns/m^4$ and the Damping Loss Factor (DLF) of said porous fibrous spring layer is equal to or higher than 0.15.

A "layer" is a body consisting of one or more materials and comprised between two closely spaced surfaces, wherein the distance between the surfaces is substantially smaller than their dimensions. The two surfaces are indicated as the "sides" of the layer and they are opposite to each other. The distance between the two surfaces is indicated as the thickness of the layer, which may be variable. A layer may comprise other layers.

At each location in a layer, the direction along the thickness of the layer is hereafter indicated as "Thickness Direction" or "out-of-plane" direction. Any direction normal to the Thickness Direction will be referred to as an "in-plane" direction. The Thickness Direction may be of particular importance in layers comprised in sound-insulating automotive trim components, since it is generally the main direction along which they may transmit noise and vibration.

Two layers are "laminated together" or "laminated onto each other" when one side of the first layer is in contact, at least on part of its surface, with one side of the second layer, so that they can cooperate to perform a specific function. Two layers which are laminated onto each other may be partially or fully bonded to each other, however this is not in itself necessary.

An automotive "sound-insulating component" is a component suitable for reducing the noise radiated by a vehicle element, such as a vibrating panel, the tyres, the powertrain.

The sound-insulating trim component according to the invention has spring-mass characteristics, i.e. it comprises a spring layer and a mass layer laminated onto each other, wherein the spring layer is suitable to reduce as much as possible the transmission of vibrations and/or noise from the side opposite the one in contact with the mass layer to the side in contact with the mass layer itself. In the sound insulating trim part according to the invention, the spring layer and the mass layer are laminated onto each other so that they can cooperate to obtain a sound-insulating effect. Both the spring layer and the mass layer may, in turn, consist of a plurality of layers laminated together.

Surprisingly, it was found that by using as spring layer a porous fibrous layer with an Air Flow Resistivity (AFR) below $7500Ns/m^4$ and a Damping Loss Factor (DLF) of at least 0.15, the low frequency performance of a sound-insulating trim part of the spring-mass type could be substantially improved, in particular in the vicinity of the spring-mass resonance, compared to that of similar prior art sound-insulating trim parts.

Analyses carried out to explain this unexpected effect showed that it may be due to a reduced fluid-structural coupling between the acoustic waves travelling through the spring layer and the fibers constituting it, combined with an increased structural damping of the fibers of the spring layer itself. In fact, acoustic waves, when travelling through a porous fibrous layer, may set the fibers into vibration, which may be detrimental for the decoupling performance of the layer, in particular at the spring-mass resonance. It was recognised that when the AFR of the porous fibrous layer is below $7500Ns/m^4$ the coupling between the fibers and the acoustic waves travelling through the porous fibrous layer may be substantially reduced and that the residual vibrational energy of the fibers may be effectively dissipated when the DLF of the porous fibrous layer is at least 0.15. These effects are particularly evident in the vicinity of the spring-mass resonance of the sound-insulating trim part according to the invention.

Air Flow Resistivity (AFR) is measured according to ISO 9053-1:2018.

Damping Loss Factor (DLF) is measured by means of the commercially available tool Elwis-S, developed and commercialized by Autoneum Management AG. For the evaluation of the DLF, tests should be carried out in air, on square samples having a side of 50mm, loaded with a top mass of 50grams. For the post-processing, the resonant method should be used with polynomial interpolation. The measurement and post-processing procedure is described in full detail in the currently available revision 2.1 of the Elwis-S manual, issued in May 2024.

The porous fibrous spring layer is suitable to reduce as much as possible the transmission of vibrations from the side opposite the one in contact with the mass layer to the side in contact with the mass layer itself. Preferably, the side of the porous fibrous spring layer opposite the one in contact with the mass layer is intended to be put in contact with a panel of a vehicle body.

In order to further enhance the sound-insulating performance of the trim component according to the invention, the dynamic Young's modulus of the porous fibrous spring layer according to the invention is preferably lower than 80kPa, more preferably lower than 55kPa, even more preferably lower than 40kPa. The dynamic Young's modulus is measured using the same Elwis-S tool and the same sample size, load mass and post-processing procedure used for the measurement of the DLF. For a given test sample, dynamic Young's modulus and DLF are preferably measured simultaneously.

In addition, always in order to enhance the performance of the sound-insulating component according to the invention, in particular in the frequency range around the spring-mass resonance, the porous fibrous spring layer according to the invention preferably has a porosity higher than 0.8, more preferably higher than 0.9 and even more preferably higher than 0.95. In fact, a higher porosity tends to further decrease the fluid-structural coupling between the acoustic waves passing through the fibrous porous spring layer and the fibers constituting it.

The porosity of a porous fibrous layer is the fraction of air contained in a given volume of the layer. It may be measured according to methods known in the art, for example the method explained in Champoux et al., "Air-based system for the measurement of porosity", The Journal of the Acoustical Society of America 89, 910 (1991).

The area weight of the porous fibrous spring layer according to the invention is preferably between $400g/m^2$ and $3000g/m^2$, more preferably between $600g/m^2$ and $2000g/m^2$ and even more preferably between $800g/m^2$ and $1600g/m^2$. The thickness of the porous fibrous spring layer according to the invention is preferably between 1mm and 80mm, more preferably between 3mm and 40mm and even more preferably between 5mm and 30mm.

Both area weight and thickness may vary over the surface of the porous fibrous spring layer according to the invention, depending on design constraints such as weight and/or packaging space limitations.

Within a porous fibrous layer, in particular within the porous fibrous spring layer according to the invention, the fibers are organized in a three-dimensional network and may have various orientations. Typically, to analyze the orientation of the fibers at a specific position (hereafter referred to also as "location" or "point") of a fibrous layer, a small square or rectangular sample of the layer around that position is cut and the orientation of the fibers on the side faces of the sample is examined. The sample should be small compared to the in-plane dimensions of the layer and such that, within the sample, the orientation of the fibers may be considered substantially homogeneous. Generally speaking, samples having dimensions in the range between about 10mm and 50mm may be used. By cutting samples around a set of positions regularly distributed over an area of a porous fibrous layer, the fiber orientation over that whole area may be analyzed.

Quite surprisingly, it was found that in areas of a porous fibrous layer where the fibers show a preferential orientation it is much more difficult to achieve the desired combination of AFR and DLF. It is thus preferable that the porous fibrous spring layer according to the invention presents at least one area wherein the fibers do not have any preferred orientation.

For a person skilled in the art, visual inspection of a sample of a porous fibrous layer may be enough to assess "prima facie" the existence of a preferential orientation for the fibers (hereafter called also "preferred orientation"), i.e. an orientation along which most of the fibers or fiber segments tend to be aligned. However, more quantitative methods available in the art may be necessary for a deeper and more objective analysis of this characteristic of porous fibrous layers.

An overview of the methods used in the art for quantitative analysis of fibers orientation, in particular methods based on image analysis, may be found, for example, in N. Mao, "Methods for characterisation of nonwoven structure, property, and performance" in "Advances in Technical NonWovens", Elsevier, 2016, ISBN 978-0-08-100575-0.

In methods based on image analysis, fibers orientation is examined by starting from a magnified image of a small area of a section of the porous fibrous layer, wherein the magnification factor used for obtaining the image should be enough for the resolution of the single fibers. From the image, the Fibers Orientation Distribution (FOD) and the relative disperion, herein indicated as Fibers Orientation Scattering (FOS) may be calculated. The FOD is a statistical distribution that gives the fraction of the total number of fiber segments in the image falling within a series of predefined ranges of orientation angle. The graph of the FOD is generally shown as a function of orientation angle in degrees. The corresponding FOS is obtained by fitting a Gaussian distribution around the maximum value of the FOD and taking the corresponding standard deviation. The lower is the FOS, the higher is the tendency of the fibers in the image to be aligned along a preferred direction. The FOS is measured in degrees.

Among the methods to calculate the FOD and the FOS from an image, those based on Fourier component analysis are widely used. In these methods, the image is chopped into square pieces and for each of these pieces the Fourier power spectrum is calculated and analyzed in polar coordinates using suitable filters. These methods are implemented also in open-source freely available image processing packages such as the software package ImageJ, developed by the USA National Institutes of Health (NIH) and by the Laboratory for Optical and Computational Instrumentation (LOCI, University of Wisconsin). In all analyses herein described, the method based on Fourier component analysis comprised in the "directionality" function of the ImageJ software (version 1.54j, released on June 12th, 2024) was used to calculate FOD and FOS. However, equivalent results may be obtained with other methods available in the art and/or by other image processing software packages.

Thus, to analyze the fiber orientation at a location of a porous fibrous layer, once a sample around that location is obtained as described above, images may be taken from the side faces of the sample and, for each one of these faces, the corresponding FOD and FOS may be evaluated by averaging over the values calculated from the images taken from that face. The lower the value of FOS obtained for a face, the higher is the tendency of the fibers on that face of the sample to be aligned along a preferred direction.

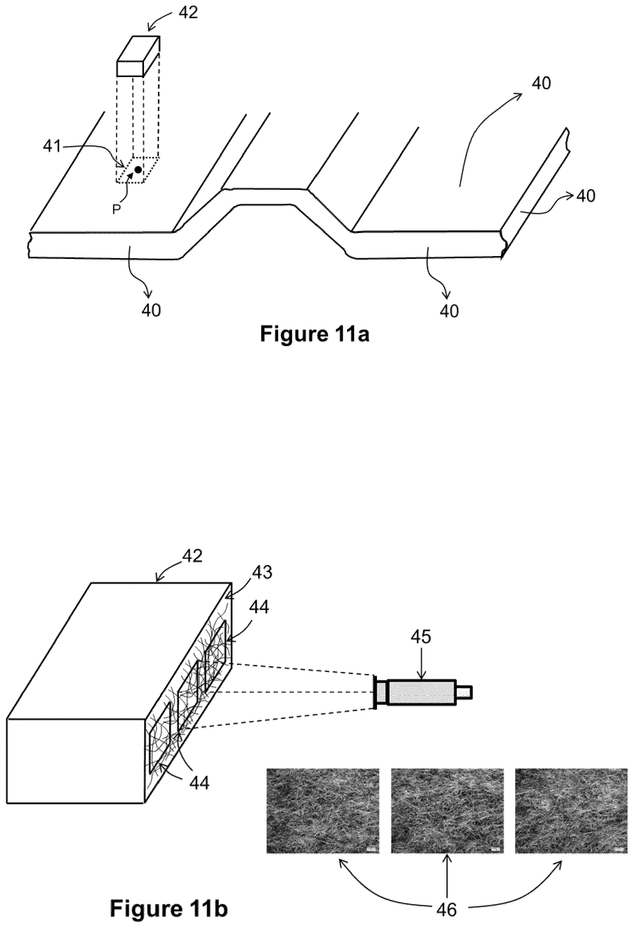

Figures 11a to 11d summarize the above-described process for obtaining the Fibers Orientation Distribution and the Fibers Orientation Scattering at a location of a porous fibrous layer. In Figure 11a, a location P on a porous fibrous layer 40 is chosen and a small rectangular area 41 around it is defined. As mentioned above, the area 41 should be small compared to the overall dimensions of the porous fibrous layer 40 and such that, within that area, the orientation of the fibers is substantially homogeneous. From the area 41 of the porous fibrous layer 40, a sample 42 around P is extracted.

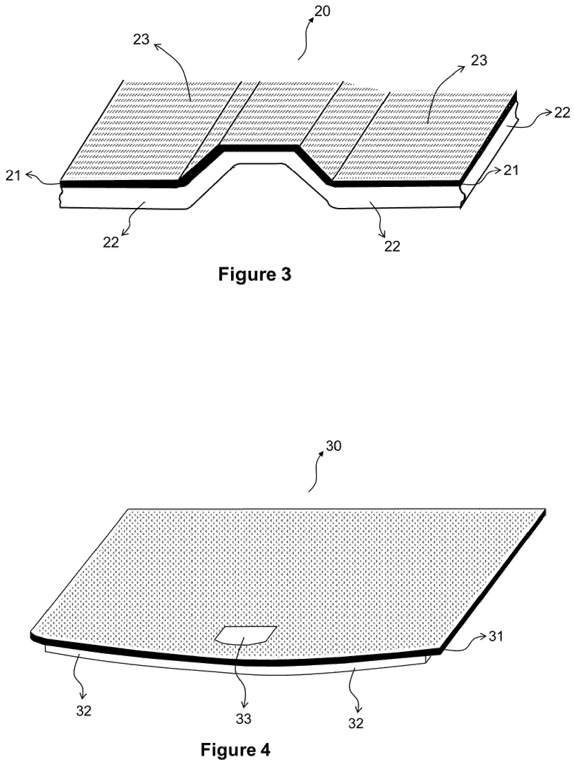

By means of a microscope 44, a few magnified images of each side of the sample 42 are taken, as shown in Figure 11b for one side 43 of the sample. In the example of Figure 11b, 3 images 46 from the concerned side are taken, obtained from three areas 44 distributed over the surface of the sample side 43.

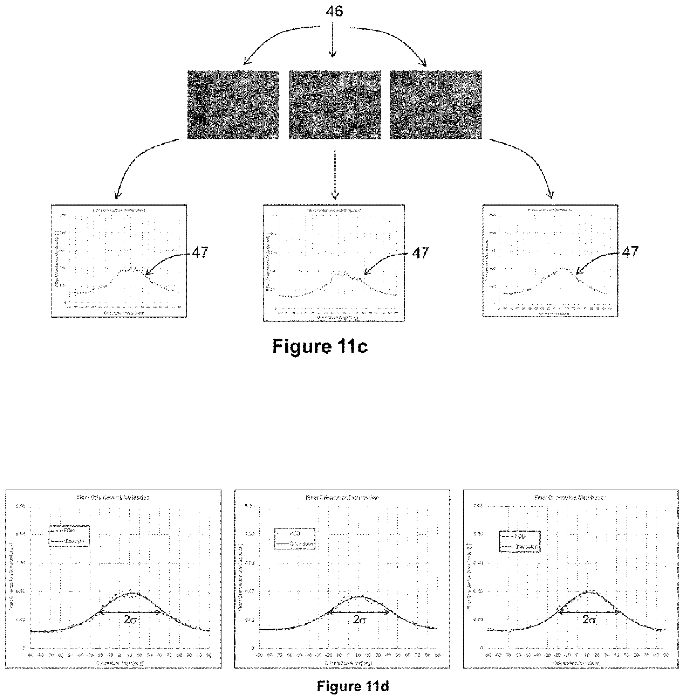

For each of the images 46, the Fibers Orientation Distribution 47 is calculated as shown in Figure 11c, e.g., by means of image processing methods such as those based on Fourier component analysis. After this, as shown in Figure 11d, each Fibers Orientation Distribution 47 is fitted with a Gaussian Distribution and, by taking the corresponding standard deviation σ, **the corresponding Fibers Orientation Scattering is obtained.** In each of the three charts in Figure 11d, the Fibers Orientation Distributions 47 obtained from one of the three images 46 is shown with a solid line and marked with "FOD", while the corresponding fitting Gaussian Distribution is marked with "Gaussian" and plotted as a solid line.

By averaging the Fibers Orientation Distributions 47 obtained from the three images and the corresponding Fibers Orientation Scattering values, one obtaines the corresponding quantities for the selected sample face 43.

The process can be repeated for all side faces of the sample 42 and, eventually, the minimum of the FOS values obtained for the faces may be taken as an indicator of the presence of a preferred orientation of the fibers in the sample.

Preferably, the porous fibrous spring layer according to the invention comprises at least one area such that any value of Fibers Orientation Scattering obtained at any location comprised in that area according to the above-described procedure is greater than 15degrees, more preferably greater than 25degrees.

These values were chosen based on analyses of different kinds of images taken from samples of fibrous layers, which indicated that when the FOS is lower than or equal to 15degrees, even a direct visual inspection of the sample by the person skilled in the art would detect the existence of a preferred orientation for the fibers. On the other hand, when the FOS calculated from an image is greater than 25degrees, no clear preferential direction can be identified visually in the sample from which that image was taken.

Preferably, the above-mentioned area of the porous fibrous spring layer according to the invention covers at least 10% of the total surface of the porous fibrous spring layer, more preferably at least 20% and even more preferably at least 30%.

Quite surprisingly, it was discovered that when fibers of the porous fibrous spring layer according to the invention at least in one area do not feature any preferential direction, in particular when their FOS in that area is greater than 15degrees, further advantageous features may be obtained, in particular a high resilience and, even more, an optimal combination of high resilience and low dynamic Young's modulus.

A high resilience of the decoupling layer may be advantageous, in particular, for sound-insulating parts which must provide, together with good sound-insulating properties, also good static load resistance properties. A very relevant example is the floor insulator, which must be able to provide a good resilience to the load applied on it by passengers who step on it, in particular when entering the vehicle or when leaving the vehicle. Another example of a part where a high resilience may be desirable is a trunk load floor.

The resilience of a decoupling layer is measured as the compression stress CV40, expressed in kPa, at a compression percentage of 40%, recorded at the $4^{th}$ loading cycle following the measurement procedure given in ISO3386:1986.

The porous fibrous spring layer according to the invention has preferably a value of CV40 of at least 4kPa, more preferably of at least 6kPa and even more preferably of at least 8kPa. Such high values of CV40 may surprisingly be obtained with the porous fibrous spring layer according to the invention, in particular in areas where the fibers do not show any preferential orientation in the sense previously described.

It is remarkable that, in the automotive field, to obtain such high values of CV40 it is generally necessary to resort either to PU-foams or to porous fibrous layers with vertically oriented fibers as spring layers. However, with these prior-art solutions the desired increase in resilience is generally accompanied by an undesirable increase of the dynamic Young's modulus. Surprisingly, with the porous fibrous spring layer according to the invention, at least in areas where the fibers do not show any preferential orientation, the above-mentioned high values of CV40 may be obtained in combination with low values of dynamic Young's modulus such as values of dynamic Young's modulus lower than 55kPa or even lower than 40kPa.

The porous fibrous spring layer according to the invention is preferably obtained from a fibrous web in the form of a flat layer or flat mat (often called "semi-finished" in the field) by compression moulding. In such a case, the orientation of the fibers in the porous fibrous spring layer is inherited from the orientation of the fibers in the semi-finished as well as from fibre relocation during the moulding process.

In turn, the concerned fibrous web or semi-finished may be obtained by means of a production line (hereafter called also "web-forming" line) comprising a series of steps organized in a fixed sequence, with the fibers transported from one step to the next along the process by various means such as rotating cylinders and/or air-jets and/or conveyor belts. The steps of the process may include, among others, feeding bale openers with bales of fibers, opening of the fibers, mixing of the fibers, carding, cross lapping, vertical lapping, horizontal lapping, needling and heating in an oven for partial consolidation. At the end of the process, the fibrous web is formed as a continuous and partially consolidated layer of fibers, eventually either collected in rolls or cut into blanks.

For such a process, it is generally possible to define for the fibrous web or semi-finished a Machine-Direction (MD), corresponding to the direction along which the fibrous web is produced and a Cross Direction (CD) normal to the MD in the plane of the fibrous web. The Thickness Direction (TD) will then be normal both to the CD and the MD. If, for example, in the last part of the process the fibrous web consisting of a continuous and partially consolidated layer of fibers is distributed along a conveyor belt, the direction of movement of the conveyor belt coincides with the MD, while the direction normal to the movement of the conveyor belt in its own plane coincides with the CD and the direction perpendicular to the plane of the conveyor belt coincides with the TD.

Furthermore, the above-described Machine Direction and Cross Direction of a semi-finished may be associated also to a porous fibrous layer which is obtained from such semi-finished by compression molding.

In a semi-finished layer, the orientation of the fibers is generally rather homogeneous, i.e., it does not depend substantially on the position. However, variations in the orientation of the fibers may occur around the boundaries of the semi-finished layer. Depending on the web-formation process, the fibers in the semi-finished may show a preferred orientation or not. For example, if the web-formation process includes at least one vertical lapping step, the fibers in the semi-finished may be oriented preferentially in the TD. US6534145 discloses a web having preferably at least 70% of the fibers oriented in the TD, often referred to as "vertically oriented" fibers. In such fibrous web, the fibers have a "pleated" arrangement. On the other hand, if the web-formation process involves a horizontal lapping step (or even a cross-lapping step), the fibers in the semi-finished will preferentially be oriented in the MD/CD plane. The same occurs for the so-called "parallel-laid" fibrous webs, wherein the fibers are, possibly through a sequence of carding steps, laid on top of each other and arranged preferentially parallel to each other in the MD or, more in general, along a direction in the MD/CD plane.

All above-mentioned preferential orientations may be detected by the person skilled in the art already at a visual inspection, in particular taking as an observation plane the MD/TD plane. However, they may also be detected using quantitative analyses like those previously described.

In general, if the fibers of the semi-finished have a preferential orientation, some preferential orientation, possibly different from that of the fibers of the semi-finished, may be shown also by the fibers of a porous fibrous layer obtained from it by compression moulding, at least locally.

For example, if the fibers in the fibrous web are preferentially oriented in the TD, during the compression moulding process they may be locally relocated and reoriented in a different direction. This may happen, in particular, in areas where the porous fibrous layer obtained from the compression moulding is relatively thin. However, within each area of approximately constant thickness and/or curvature, the semi-finished will be compressed in approximately the same way and along the same moulding direction and thus its fibers will be relocated in approximately the same way, such as by tilting them in a certain direction. A preferential direction will thus be maintained, even though it may be different from that of the semi-finished from which the porous fibrous layer is obtained and it may be only of a local character.

US6534145 discloses some examples of porous fibrous layers obtained by moulding fibrous webs with fibers preferentially oriented in the TD and wherein some preferential orientation of the fibers is maintained also after the moulding, although locally. On the other hand, if the fibers in the semi-finished are preferentially oriented in the MD/CD plane, in particular along the MD, at the end of the compression moulding process they may locally show an in-plane preferential orientation, i.e. they may be preferentially oriented in a way perpendicular to the local thickness direction of the porous fibrous layer.

The procedure previously described for the analysis of fibers orientation at a location on a porous fibrous layer is directly applicable also to a semi-finished layer. In the case of a semi-finished layer, it is of particular interest to consider -for the analysis of fibers orientation at a location- samples having faces aligned with the Machine and Cross Directions. In particular, due to the web-formation process, sample faces aligned with the Machine Direction are the ones for which the existence of preferred directions in fibers orientation may be best revealed. In general, if the analysis of fibers orientation on faces aligned with the Machine Direction does not reveal any preferred direction, the same applies also to faces aligned with other directions, in particular with the Cross Direction.

The same applies to a porous fibrous layer obtained by compression molding a semi-finished layer: also in this case, for the analysis of the fibers orientation at a location, it is of particular interest to consider samples having faces aligned with the Machine and Cross Directions and to analyze the fibers orientation on faces aligned with the Machine Direction.

The porous fibrous layer according to the invention is preferably obtained by compression molding a semi-finished layer comprising an area such that at any location comprised in that area the FOS obtained from a sample cut around that location and having faces aligned with the MD/CD is greater than 15 degrees, more preferably greater than 25degrees. As previously explained, this feature guarantees that the fibers in that area of the semifinished layer do not show any preferential orientation.

This is advantageous since a preferential orientation of the fibers, e.g., in the semi-finished in the TD may confer to the fibers in the moulded porous fibrous spring layer an out-of-plane preferential direction, while a preferential orientation of the fibers in the semi-finished, e.g., along the MD/CD plane may confer to the fibers in the moulded porous fibrous spring layer a preferental in-plane direction. On the other hand, if the fibers in the semi-finished do not feature any preferential orientation, this obviously occurs even more for a porous fibrous layer obtained from it by compression molding.

In addition, the above-mentioned feature concerning the orientation of the fibers in the semi-finished may provide also further advantages, related to the shapeability of the semi-finished itself in a compression moulding process.

The actual shape of a sound-insulating trim component obtained by compression molding may match its nominal shape in a better or worse way, depending on the materials it comprises. Here, the "nominal shape" of such a trim component is the one defined by the cavity of the tool used to mold it. There may be several reasons why the actual shape of the sound-insulating trim component may not match well the nominal one. For example: due to poor elongation properties, some of the materials comprised in the trim component may offer a high resistance to the stretching typically occurring during molding, or some of these materials may have a high elasticity and thus show an elastic rebound at the end of the compression process, when the molding tool is opened (so-called "spring-back" effect).

Generally, it is in desirable that the actual shape of a sound-insulating trim component obtained by compression molding matches as accurately as possible its nominal shape. This is even more true for a porous fibrous spring layer: in fact, in the event that this does not accurately follow its nominal shape, the part may not conform to the body panels of the vehicle on which it is to be installed.

In the preferred case in which the porous fibrous spring layer is obtained by compression moulding a semi-finished, the "shapeability" properties of the semi-finished become then important. In a broad sense, a semi-finished may be considered to have good "shapeability" properties when a porous fibrous layer obtained from it by compression molding can accurately follow even complex three-dimensional features of its nominal shape, such as small curvature radii and/or abrupt thickness changes.

Given that no general standard is available to assess these properties, an engineering procedure was developed to study the shapeability properties of various semi-finished layers. This procedure is based on the idea that, in the automotive field, the shape feature that most commonly may lead to a misalignment between the actual and the nominal shape of a trim part is an abrupt change in the nominal thickness of the trim part, which may not be well followed by the actual shape of the same part itself.

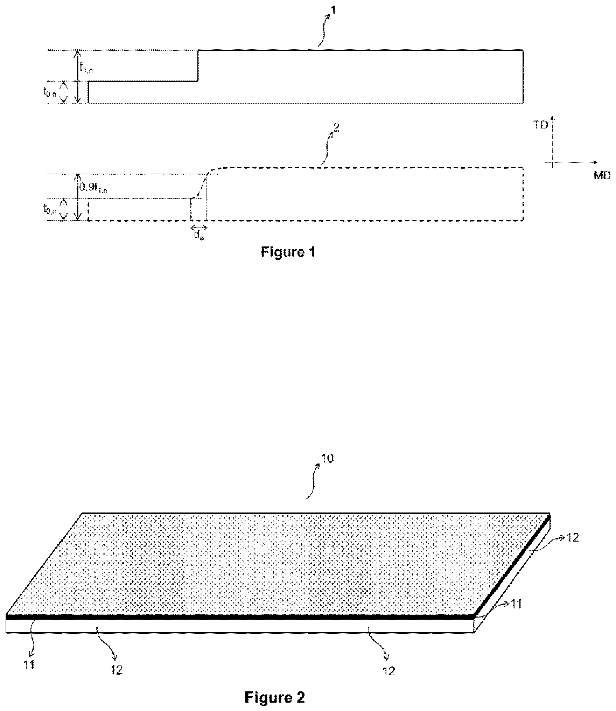

Figure 1 illustrates the engineering procedure that was used for assessing the shapeability of a semi-finished. In this procedure, a semifinished is compression molded according to a nominal shape consisting of a layer having one flat side and featuring an abrupt change in thickness. In Figure 1, a section (1) of this nominal shape in the MD/TD plane is shown, wherein there is a change in thickness from a thickness $t_{0,n}$ to a thickness $t_{1,n}$ (with $t_{0,n} < t_{1,n}$). This change is exactly in the TD direction, i.e. as abrupt as possible. In the same Figure 1, also the corresponding section (2) of the porous fibrous layer obtained by compression molding the semi-finished is shown. As displayed, in correspondence of the abrupt change of thickness, the actual porous fibrous layer cannot perfectly follow the nominal shape. The minimum distance $d_a$ between a point where the actual thickness is equal to $t_{0,n}$ and a point where the actual thickness is 90% of $t_{1,n}$ is taken. The shapeability of the semi-finished layer is then assessed by means of the parameter $s_{MD} = d_a/(t_{1,n}-t_{0,n})$, hereafter indicated as "shapeability factor" in the MD. This parameter is normally expressed in % and it may depend of the thickness $t_{0,n}$, although in a mild way. Clearly, the procedure outlined here above may by applied also for a section cut along the CD/TD plane to obtain the analogous parameter in the CD $s_{CD}$.

In the above-described procedure, the shapeability of a semi-finished layer is assessed based on the molding of a sample having one flat side. This allows an easy and objective assessment of the shapeability. However, it is clear to the person skilled in the art that a semi-finished layer providing a low $s_{MD}$ and/or $s_{CD}$ factor allows obtaining porous fibrous layers more accurately following their nominal shape even when such shape is generically three-dimensional.

Surprisingly, if the fibers in the semi-finished layer do not show any preferential orientation in the sense previously explained, its shapeability is substantially enhanced. This may be due to the fact that the existence of a preferential orientation of the fibers may lead either to elongation issues (e.g. when the fibers are preferentially oriented along the MD/CD plane) or to "spring-back" issues (e.g. when the fibers are preferentially oriented along the TD). On the other hand, when the fibers do not show any preferential orientation, they tend to fill the space of the porous fibrous spring layer in a more uniform and isotropic way.

Preferably, the semi-finished used for molding the porous fibrous spring layer according to the invention has a shapeability factor in the MD lower than 25%, more preferably lower than 15% and a shapeability factor in the CD lower than 50%, more preferably lower than 25%. Such low values of the shapeability factor may surprisingly be obtained provided the fibers comprised in the semi-finished do not show any preferential orientation. In which case, very advantagously, the porous fibrous spring layer according to the invention obtained by molding the semi-finished will more accurately follow its nominal shape.

A fibrous web or semi-finished having the above-described preferred fiber orientation properties may be obtained by means of web-forming lines known in the art. An example is a web-forming line comprising a loading station, a processing station, a pressing station and an optional heating station organized in this sequence and performing the following steps:

1. In the loading station, fibers are fed into the processing station, preferably in a continuous way. The loading station may be very simple and consist, for example, of just a conveyor belt. However, it may also be much more complex and comprise, for example, one or more bale openers, a blending box, a first opener and a buffer box, organized in this sequence.

2. In a second step, the processing station performs the conditioning of the fibers as desired and required by the circumstances (e.g., further open the fibers, disentangle them, remove impurities, possibly orient the fibers, etc.). The processing station includes at least a main rotating cylinder, which must be able to engage the fibers arriving from the loading station. For this purpose, the surface of the main cylinder may be garnished, e.g., with rigid tips or rigid seals. The processing station may comprise also further pieces of equipment, e.g. further cylinders, which cooperate with the main cylinder in the conditioning of the fibers.

3. In the transfer station, the fibers are collected from the outlet of the processing station and conveyed to the inlet of the pressing station. This is performed in such a way to avoid that, during the transfer, a preferential orientation is conferred to the fibers. This may be obtained, for example, with a transfer station comprising a conveyor belt moving from the outlet of the processing station to the inlet of the pressing station and a suction unit creating two air-jets which impinge on the inlet of the conveyor belt in directions substantially opposite to each other, to be then both re-directed along the conveyor belt in the same direction of its movement. The fibers will thus be transported by the combination of the air-jets and the conveyor belt towards the pressing station. The opposed air-jets are such that the flow along the transfer station is of a turbulent nature so that the fibers, in this transfer, will tend to assume random orientations. In particular, the transportation by means of the air-jets will prevent the fibers to align preferentially either in the TD or along the CD/MD plane.

4. In the pressing station, the fibers are pressed to a predefined thickness, e.g., by means of calendering cylinders arranged at a corresponding distance from each other.

5. Eventually, at the outlet of the pressing station the fibers may be conveyed into the heating station which may consist, just by way of example, of a hot-air oven where they may be further compressed if desired. This heating step may be aimed at partially consolidating the fibrous web by partially activating the binder that may be present in it.

As it is apparent from the description above, in this example of web-forming line the key-step in order to obtain the desired orientation of the fibers in the semi-finished is the step performed by the transfer station. The above-described web-forming line is just an example, wherein each step/station may be replaced by an equivalent one. For example, the partial consolidation of the fibrous web, obtained in the above-described process by means of a heating station, could be obtained by needle-punching the unconsolidated fibrous web in a needling station.

However, in order to prevent the fibers from assuming a preferred orientation, the web-forming process preferably does not include any vertical-lapping step and/or any horizontal lapping and/or cross-lapping step.

The porous fibrous spring layer according to the invention may comprise any kind of natural and/or synthetic fibers and/or mineral fibers common in the industry. Examples of natural fibers are cotton, wool, flax, hemp, bamboo, sisal, jute, and abaca fibers. Examples of synthetic fibers are polypropylene fibers, polyethylene fibers, polyester fibers, in particular polyethylene-terephthalate (PET) fibers, polylactic acid (PLA) fibers and polyamide (PA) fibers, in particular polyamide 6 or polyamide 6.6 fibers. Examples of mineral fibers are glass fibers or ceramic fibers.

The porous fibrous spring layer according to the invention may consist of only one single kind of fibers but it may also be a mix of fibers of different kinds.

Synthetic fibers may be mono-component or bicomponent fibers. Mono-component fibers are made from a single polymer, while bicomponent fibers are made from two polymers, a first polymer and a second polymer, of different chemical and/or physical structure that are tightly but separably connected to each other along the fiber. Bicomponent fibers may be produced using processes known in the art, e.g. by melt spinning. In this process, the polymers are spun by a spinneret into a fiber either next to each other (side-by-side configuration) or around each other (core-sheath configuration) or in a mixture with an inhomogeneous distribution (island-in-the-sea or segmented-pie configuration).

In addition, the fibers comprised in the porous fibrous spring layer according to the invention can have cross-sections of various shapes; preferably, the fibers have a round or trilobal cross-section. Always in relation to their cross-section, the fibers may be hollow or solid, wherein the cross-section of a hollow fiber presents an internal cavity, so that a hollow fiber has a tube-like structure, while the cross-section of a solid fiber is completely filled by the material or materials constituting the fiber.

The fibers of the porous fibrous spring layer are preferably staple fibers, with a length comprised between 32mm and 76mm. Staple fibers are fibers that, differently from endless filaments, come in discrete predefined lengths.

Furthermore, in order to enhance sound insulating performance, the fineness of the fibers is preferably between 0.5denier and 30denier, more preferably between 0.5denier and 18denier, even more preferably between 0.5denier and 12denier. For a given mass of porous fibrous material, finer fibers provide a better sound-insulating performance.

Advantageously, the fibers of the porous fibrous spring layer may be at least partially of a recycled nature, in order to reduce the environmental impact of the manufacturing process of the sound insulating component according to the invention, for what concerns specifically material consumption. In particular, the material or materials of the porous fibrous spring layer may be in the form of a shoddy natural fiber, for example a shoddy cotton, or in the form of a shoddy synthetic fiber, for example a shoddy polyester. A shoddy type of fibrous material is here defined as comprising at least 51% by weight of recycled fibers of the concerned material. For instance, a shoddy cotton contains at least 51% by weight of recycled cotton fibers, being the remaining 49% by weight constituted by fibers of a different material and/or by virgin fibers.

Furthermore, the porous fibrous spring layer according to the invention preferably comprises a binder, preferably in an amount comprised between 10% and 60% by weight. A binder may improve the mechanical consistence of the sound insulating trim component according to the invention so that it can be easily handled during the production process and/or the installation process on the vehicle. The binder may be of a thermoset or of a thermoplastic nature. In both cases, some kind of thermal treatment may be needed in order to activate it. A thermoset binder is preferably in the form of an epoxy resin or a phenolic resin or a mixture of both. A thermoplastic binder is preferably in the form of thermoplastic binder fibers. These are fibers comprising at least one portion which melts as a result of a thermal treatment, forming droplets that bind all the other fibers at their crossing/contact points. The melting temperature of the binder fibers (or the portion of the binder fibers that melts) must obviously be lower than that of all the other fibers (and of the portion of the binder fibers that possibly does not melt). Binder fibers may be mono-component or bicomponent fibers. A thermoset binder is preferable when enhanced mechanical properties and structural consistence are needed. On the other hand, a binder in the form of thermoplastic binder fibers is preferable when very complex 3-dimensional shapes have to be realized.

Particularly preferred is the case in which the porous fibrous layer entirely consists of polyester fibers. A porous fibrous layer entirely made of polyester allows easier recycling of either production cut-offs and/or of the sound-insulating trim component as a whole at the end of the product lifecycle. In particular, it turned out that the desired combination of AFR and DLF may be more easily obtained with a mix of bicomponent PET/CoPET core-sheath binder fibers having a fineness of about 4denier in an amount of 10% to 50% by weight and mono-component PET hollow fibers having a fineness of about 11denier in an amount of 10% to 90% by weight, wherein the percentages corresponding to the different fiber types add up to 100%.

When PET and/or co-polymers of PET are used for the fibers constituting the porous fibrous layer, at least a part of it may advantageously be of a recycled nature. For example, the PET may be obtained from consumer products like PET bottle flakes or from PET packaging items or from PET marine products like fishing nets, by melting them and forming them into pellets that may be used for the spinning process. Using recycled polyester has the advantage of reducing the environmental impact of the manufacturing process of the trim component according to the invention, in particular its $CO_2$ footprint. Preferably at least 20% by weight, more preferably at least 50% by weight and even more preferably at least 70% by weight of the polyester used for the polyester fibers comprised in the porous fibrous spring layer according to the invention is recycled polyester.

In the sound-insulating trim component according to the invention, the mass-layer can be realized in several different ways.

In a first embodiment, the mass layer may consist of an acoustic barrier layer. Herein, an "acoustic barrier layer" is intended to be a layer of material which is impervious to air and with an area weight preferably between 500g/m$^2$ and 10000g/m$^2$, more preferably between 1500g/m$^2$ and 5000g/m$^2$ and even more preferably 2000g/m$^2$ and 3500g/m$^2$.

In a preferred embodiment, the acoustic barrier layer is a layer comprising a matrix of thermoplastic elastomeric material, mass-loaded with an inorganic filler, wherein the material or materials comprised in the thermoplastic elastomeric matrix are preferably selected from the group consisting of ethylene vinyl acetate copolymer (EVA); Ethylene Propylene Diene Monomer (EPDM); Poly Olefin elastomer (POE), like 1- Octene Polymer with ethene or 1-Butene Polymer with ethene; a Co-Polypropylene, like propene polymer with ethene; polyesters such as polyethylene terephthalate (PET) and/or polybuthylene therephthalate (PBT); poly-propylene (PP); polyethylene such as High Density Polyethylene (HDPE) and/or Low Density Polyethylene (LDPE) and/or Ultra High Molecular Weight Polyethylene (UHMWPE); Poly Vinyl Chloride (PVC); Poly Carbonate (PC); polyamide such as PA-4 and/or PA-6 and/or PA-66; Thermoplastic Polymide (TPI); Thermoplastic Polyolefin (TPO); Thermoplastic Polyurethane (TPU); Poly Tetra Fluoro Ethylene (PTFE); Poly Ether Ether Ketone (PEEK); Acrylonitrile Butadiene Styrene (ABS); Poly Methyl Metha Crylate (PMMA). The inorganic filler is preferably one of calcium carbonate (CaC03) and/or Barium Sulphate (BaSO4). In addition, the amount of inorganic filler is preferably up to about 85% by weight. Such an "acoustic barrier layer" is often referred to also as "heavy layer" in the field.

Always in this first embodiment of the mass layer according to the invention, the thickness of the acoustic barrier layer is preferably between 0.2mm and 5mm, more preferably between 0.8mm and 3mm.

In a second embodiment, the mass layer of the trim component according to the invention consists of a porous fibrous layer. To distinguish it from the porous fibrous spring layer according to the invention, we will refer to it as "porous fibrous mass layer".

In this embodiment, the porous fibrous mass layer preferably has an AFR much higher than that of the porous fibrous spring layer according to the invention. This realizes an impedance mismatch at the interface between the two layers, which may help enhancing the sound-insulation properties of the sound-insulating trim component according to the invention. In this second embodiment, the porous fibrous mass layer has an AFR preferably between 35000Ns/m$^4$ and 1200000Ns/m$^4$, more preferably between 60000Ns/m$^4$ and 800000Ns/m$^4$ and even more preferably between 90000Ns/m$^4$ and 400000Ns/m$^4$.

Furthermore, in this second embodiment of the mass layer, the porous fibrous mass layer is preferably substantially thinner than the porous fibrous spring layer. Preferably, the thickness of the porous fibrous mass layer is less than 70%, more preferably less than 50% and even more preferably less than 30% than the thickness of the porous fibrous spring layer. In addition, the area weight of the porous fibrous mass layer is preferably comprised between 200g/m$^2$ and 2000g/m$^2$, more preferably between 400g/m$^2$ and 1600g/m$^2$, even more preferably between 800g/m$^2$ and 1400g/m$^2$.

The porous fibrous mass layer may comprise any kind of natural and/or synthetic fibers common in the industry, similarly to the porous fibrous spring layer. In particular, all the types of fibers and fiber mixtures described in relation to the porous fibrous spring layer according to the invention may be used also for the porous fibrous mass layer. However, the porous fibrous mass layer has preferably a density higher than that of the porous fibrous spring layer. This means that even when the same fibers or fiber mix is used for the porous fibrous spring and mass layers, these are preferably more compressed in the mass layer than in the spring layer. Preferably, the density of the porous fibrous mass layer is between 100kg/m$^3$ and 600kg/m$^3$, more preferably between 200kg/m$^3$ and 450kg/m$^3$.

Preferably, the material or materials used for the fibers of the porous fibrous mass layer and the material or materials used for the fibers of the porous fibrous spring layer belong to the same chemical group, making recycling easier.

In a third embodiment, the mass layer in the sound-insulating trim component according to the invention comprises a porous fibrous mass layer according to the second embodiment just described and an air-impervious film laminated together, wherein the film is laminated onto the porous fibrous spring layer according to the invention.

The film is preferably of a polymeric nature, preferably comprising at least one of the polymers or copolymers selected from the group consisting of polyesters such as polyethylene terephthalate (PET) or polybutylene terephthalate (PBT); polyamides such as polyamide 6 or polyamide 66; polyolefins such as polypropylene (PP), polyethylene (PE); thermoplastic elastomers (TPEs) such as thermoplastic polyolefin (TPO), thermoplastic polyurethane (TPU); elastomers such as EPDM-based elastomers or butadiene-based elastomers or silicones; high performance polymers such as polytetrafluoroethylene (PTFE), polyetherimide, polysulfone, polyethersulfone, polyetheretherketone (PEEK); ethylene vinyl acetate (EVA); biopolymers such as polylactic acid (PLA).

The film may be mono-layer, bi-layer or multi-layer. Bi-layer or multilayer films may be used to further increase stability, elasticity and/or robustness.

The area weight of the film is preferably between 10g/m$^2$ and 200g/m$^2$, more preferably between 50g/m$^2$ and 150g/m$^2$.

Preferably the material or materials used for the film and the material or materials used for the porous fibrous mass layer belong to the same chemical group, making recycling easier. To further enhance recycling, this chemical group is preferably the same as that of the fibers comprised in the porous fibrous spring layer according to the invention.

In this third embodiment of the mass layer, in order to enhance the sound-insulation properties of the trim component according to the invention, the dynamic Young's modulus of the porous fibrous mass layer is preferably at least 96*AW*t, wherein AW is the area weight of the porous fibrous mass layer in grams/m$^2$ and t is the thickness of the porous fibrous mass layer in mm. A mass layer according to this third embodiment and fulfilling this requirement on the dynamic Young's modulus is disclosed, for example, in EP2365483. Here, the dynamic Young's modulus of the porous fibrous mass layer is measured in the out-of-plane direction.

In a fourth embodiment, the mass layer in the sound-insulating trim component according to the invention comprises a porous fibrous mass layer of the type described for the second embodiment and a barrier layer of the type described for the first embodiment laminated together, wherein the barrier layer is laminated onto the porous fibrous spring layer according to the invention. This fourth embodiment of the mass layer is similar to the third one, wherein the barrier layer replaces the film layer.

In this fourth embodiment of the mass layer, in order to enhance the sound insulation properties of the trim component according to the invention, the dynamic Young's modulus of the porous fibrous mass layer is preferably at least

$$118 \cdot t_p \cdot \frac{AW_b \cdot AW_p + \frac{AW_p^2}{4}}{AW_p + AW_b}$$

, wherein $t_p$ is the thickness of the porous fibrous mass layer in mm, $AW_b$ is the area weight of the barrier layer in grams/m$^2$ and $AW_p$ is the area weight of the porous fibrous mass layer in grams/m$^2$. A mass layer according to this fourth embodiment and fulfilling this requirement on the dynamic Young's modulus is disclosed, for example, in EP2684187. Here, the dynamic Young's modulus of the porous fibrous mass layer is measured in the out-of-plane direction.

In a fifth embodiment, the mass layer in the sound-insulating trim component according to the invention comprises a porous fibrous mass layer like the one previously described for the second embodiment and an air-permeable foil laminated together, wherein the air-permeable foil is laminated onto the porous fibrous spring layer according to the invention.

In this fifth embodiment, the mass layer is somehow intermediate between that of the second embodiment and that of the third embodiment: a film is interposed between the decoupling layer and the porous fibrous mass layer but, differently from the case of the third embodiment, the film is an air-permeable one.

Furthermore, in this fifth embodiment the sound-insulating trim part according to the invention is preferably air-permeable and the Air Flow Resistance of the mass layer (given by the combination of the porous fibrous mass layer and the air-permeable film) is preferably at least 55%, more preferably between 65% and 80% of the total Air Flow Resistance of the sound-insulating trim component according to the invention. Similarly to what was described in relation to the second mass layer embodiment, this realizes an impedance mismatch at the interface between the mass layer and the remaining layers of the trim component according to the invention, which may help enhancing the sound-insulation properties of this same component. The Air Flow Resistance of a layer is the product of the Air Flow Resistivity of the layer and its thickness.

Embodiments of the mass layer may also be envisaged to provide, besides the sound-insulating function, also a decorative function. In fact, any needle-punched or tufted carpet as known in the automotive field may be used as a mass layer that combines the sound-insulating function with a decorative function. In addition, more complex mass layers with decorative function may be obtained by overlaying such a carpet on top of any of the previously described mass layer embodiments, obviously on the side opposite to the one where the mass layer is in contact with the porous fibrous spring layer.

The embodiments described here above for the sound-insulating trim component, for the porous fibrous spring layer and for the mass layer according to the invention represent just examples of constructions and/or material arrangements to obtain this same sound-insulating component. By considering the constructions and the features of the materials here above described, in particular their nature, density, thickness, area weight, AFR and dynamic Young's modulus, the person skilled in the art may easily derive from these embodiments further material arrangements that may be more suitable than those presented here for the specific circumstances of the case.

In addition to this, further embodiments of the trim component according to the invention may be derived from the description also by combining the different embodiments and examples of the invention and may be also derived from the description of the embodiments shown in the Figures. The Figures are schematic and not necessarily in scale. Ranges include end-points.

**Brief description of drawings**

Figure 1 illustrates an engineering procedure for the assessment of the shapeability properties of a fibrous web or semi-finished layer.

Figures 2 to 4 show examples of sound-insulating trim components with spring-mass characteristics.

Figures 5a and 5b show charts comparing the sound Insertion Loss of sound-insulating trim components according to the invention with that of sound-insulating trim components with spring-mass characteristics belonging to the state of the art.

Figures 6a to 6c show images taken from a porous fibrous spring layer according to the invention, wherein the orientation of the fibers does not show any preferential direction.

Figure 7 shows a chart with Fibers Orientation Distributions calculated from the images shown in Figures 6a to 6c.

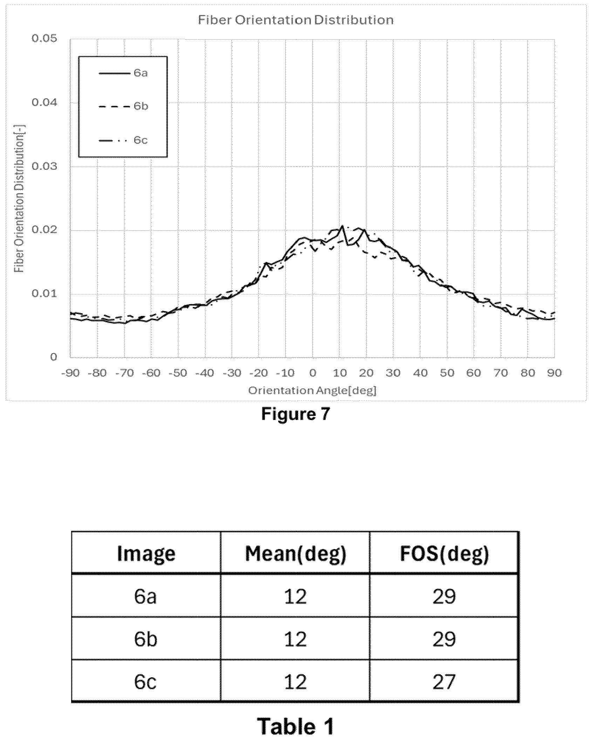

Table 1 reports Fibers Orientation Scattering data for the Fibers Orientation Distributions shown in Figure 7.

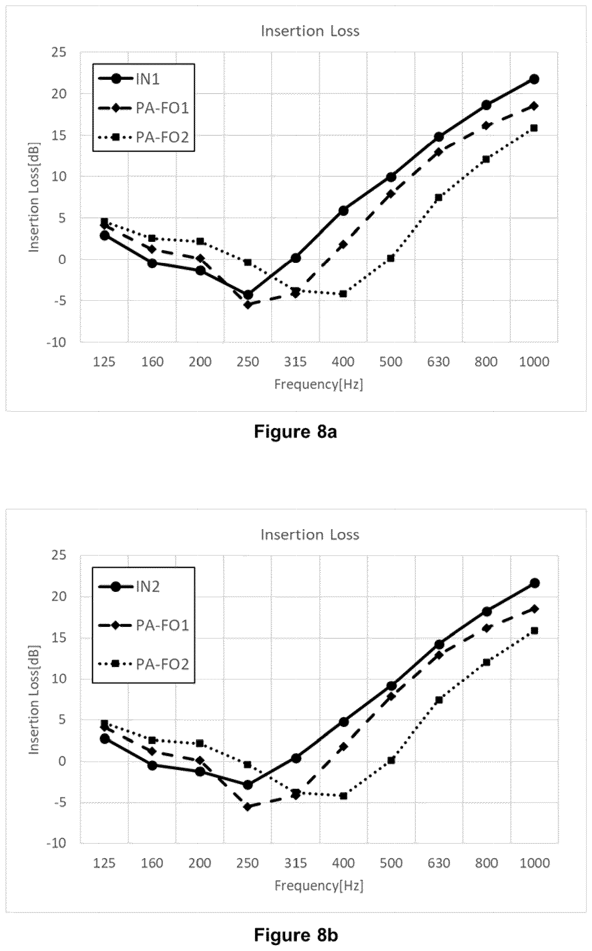

Figures 8a and 8b show charts comparing the sound Insertion Loss of sound-insulating trim components according to the invention with that of sound-insulating trim components with spring-mass characteristics belonging to the state of the art, wherein the spring layer is realized with PU foam.

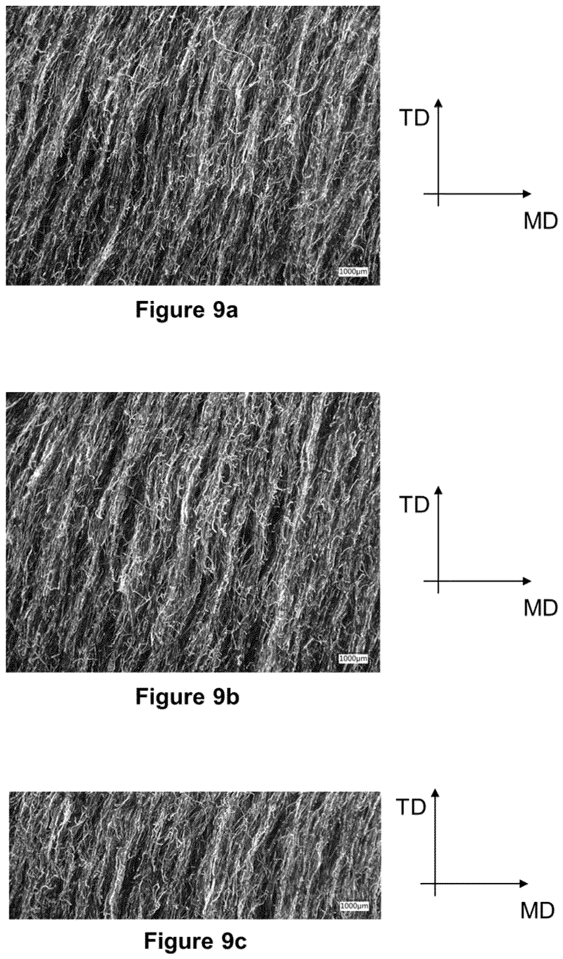

Figures 9a to 9c show pictures taken from a porous fibrous spring layer wherein the fibers show a preferential orientation.

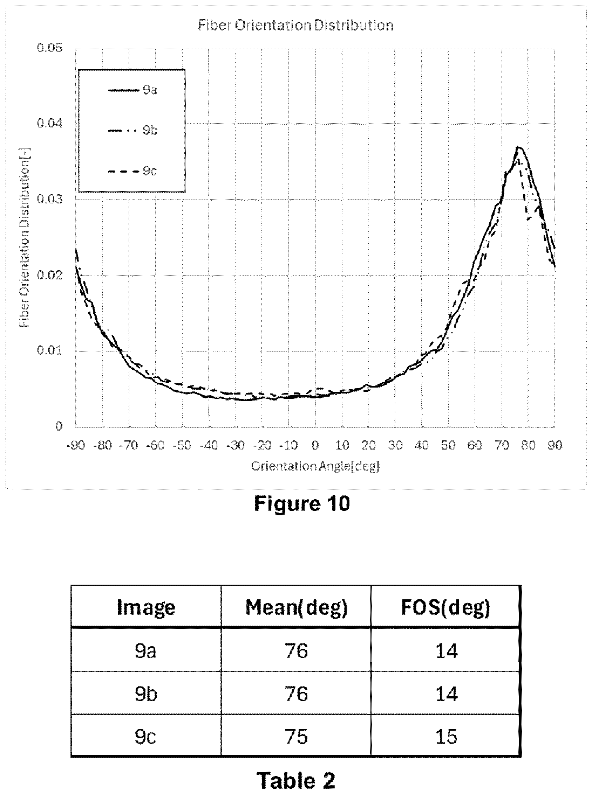

Figure 10 shows shows a chart with Fibers Orientation Distributions calculated from the images displayed in Figures 9a to 9c.

Table 2 reports Fibers Orientation Scattering data for the Fibers Orientation Distributions shown in Figure 10.

Figures 11a to 11d illustrate the procedure for the analysis of fibers orientation at a location on a porous fibrous layer.

Figure 1 illustrates an engineering procedure for the assessment of the shapeability properties of a fibrous web or semi-finished layer. This Figure has already been described and will not be further commented here.

Figure 2 shows a sound-insulating trim component (10) with spring-mass characteristics, in the form of a flat panel. It comprises a mass layer (11) and a fibrous porous spring layer (12) laminated together. The mass layer may assume any of the embodiments previously described. For example, it may consist of a single layer such as an acoustic barrier layer or a porous fibrous mass layer. However, it may comprise also more than one layer, for example a film and a porous fibrous mass layer laminated together.

Figure 3 shows a sound insulating trim component (20) with spring-mass characteristics in the form of an automotive floor insulator and comprising a mass layer (21) and a porous fibrous spring layer (22). In this embodiment, the mass layer (21) preferably comprises, on the side opposite the one in contact with the spring layer (22), a decorative layer (23) such as a needle-punched or a tufted carpet.

Figure 4 shows a sound insulating trim component (30) with spring-mass characteristics in the form of an automotive trunk load floor and comprising a mass layer (31) and a porous fibrous spring layer (32). In this embodiment, a handle (33) is integrated in the mass layer (31) to lift the trunk load floor when needed.

Example IN1 according to the invention

A first porous fibrous spring layer according to the invention was realized as follows. A semi-finished was first produced, using a web-forming line comprising a loading station, a processing station, a transfer station, a pressing station and a heating station as previously described, wherein in the transfer station a suction unit with two suction areas along the web-forming line was comprised to prevent, as much as possible, the fibers to assume a preferential orientation, as previously described. The fibrous mixture used for the production of the fibrous web consisted of 80% by weight of PET hollow staple fibers having an average length of approximately 60mm and a fineness of approximately 12dtex and 20% by weight of PET/CoPET bicomponent core-sheath binder staple fibers with a length of approximately 51mm and a fineness of approximately 4.4dtex. The thickness of the semi-finished layer was about 30mm and its area weight was approximately 900grams/$m^2$. The semi-finished was then compression molded to a flat sample having size 1.2m x 1m and a constant thickness of about 20mm. The compression molding process was a standard steam molding process as known in the art.

The AFR of the first porous fibrous spring layer, measured according to the ISO 9053-1:2018 standard, was about 4650Ns/$m^4$ (average of 3 samples). Its DLF, measured with Elwis-S as previously described, was 0.16 (average of 3 samples).

A first sound-insulating trim component according to the invention IN1 was then built by laminating, on one side of the first porous fibrous spring layer a mass layer consisting of an acoustic barrier made with EPDM loaded with an inorganic filler. The area weight of this mass layer was about 3kg/$m^2$.

Example IN2 according to the invention

A second porous fibrous spring layer and a second sound-insulating trim component IN2 according to the invention were then realized following the same steps as described above for IN1 but modifying, in the fiber mixture, the ratio between the two types of fibers from 80% - 20% by weight to 60% - 40% by weight. The AFR of this second porous fibrous spring layer, measured according to the ISO 9053-1:2018 standard, was about 6100Ns/m$^4$ (average of 3 samples). Its DLF, measured with Elwis-S as previously described, was 0.17 (average of 3 samples).

First comparitive example PA-FO1

For comparative purposes, a prior-art sound-insulating trim component with mass-spring characteristics, comprising a PU-foam spring layer and having the spring-mass resonance at a frequency comparable to that of the above-described sound-insulating trim parts IN1 and IN2 according to the invention was realized as follows.

A spring layer consisting of a PU foam in the form of a flat sample having dimensions 1.2m x 1m and a thickness of 20mm was produced, wherein the density of the foam was about 52kg/m$^3$ and the mixing ratio used in its production (i.e., the ratio between the two main constituents of the PU foam polyol and diisocyanate) was 0.46. From this, a first prior-art sound-insulating part with foam decoupler was obtained by laminating a barrier layer on one side of the PU-foam layer, wherein the barrier layer has the same characteristics (same material, same area weight) as that previously described for the sound insulating trim components IN1 and IN2 according to the invention.

Second comparitive example PA-FB

Always for comparative purposes, a second prior-art sound insulating trim component was realized in a similar way as the above-described trim component PA-FO1, but using as spring layer a prior-art porous fibrous layer having an AFR of about 13500Ns/m$^4$ and a DLF of about 0.086. In this prior art porous fibrous spring layer the fibers may be considered substatially "parallel-laid" along the in-plane direction. The area weight of this prior art porous fibrous spring layer was about 1100gsm and its thickness about 20mm. The fiber mix used for this prior-art porous fibrous spring layer consisted in 18% by weight of PET/CoPET binder fibers with a length of approximately 51mm and a fineness of approximately 4.4dtex, 30% by weight of PET hollow-conjugate fibers having a length of approximately 51mm and a fineness of 7dtex and 52% by weight of solid staple fibers having a length of approximately 38mm and a fineness of approximantely 3.3dtex.

The sound Insertion Loss of the above-listed examples according to the invention and of the comparative examples was measured as follows. The part was laid on top of a flat steel plate having dimensions 1.2m x 1m and thickness 0.8mm, with the porous fibrous spring layer according to the invention put in contact with the plate. The Transmission Loss $TL_1$ of the pile-up so obtained was measured in the commercially available facility Isokell, produced and marketed by Autoneum Management AG. In this facility, Transmission Loss is measured following the guidelines of the ASTM E90 standard. After this, the Transmission Loss $TL_0$ of the steel plate alone is measured and the Insertion Loss (IL) of the sound-insulating trim part is obtained as $TL_1$-$TL_0$. In simple terms, the Insertion Loss represents the impact the sound insulating trim part has on the sound power radiated by the steel panel. A positive IL indicates a reduction of radiated sound power, while a negative IL indicates an increase of radiated sound power.

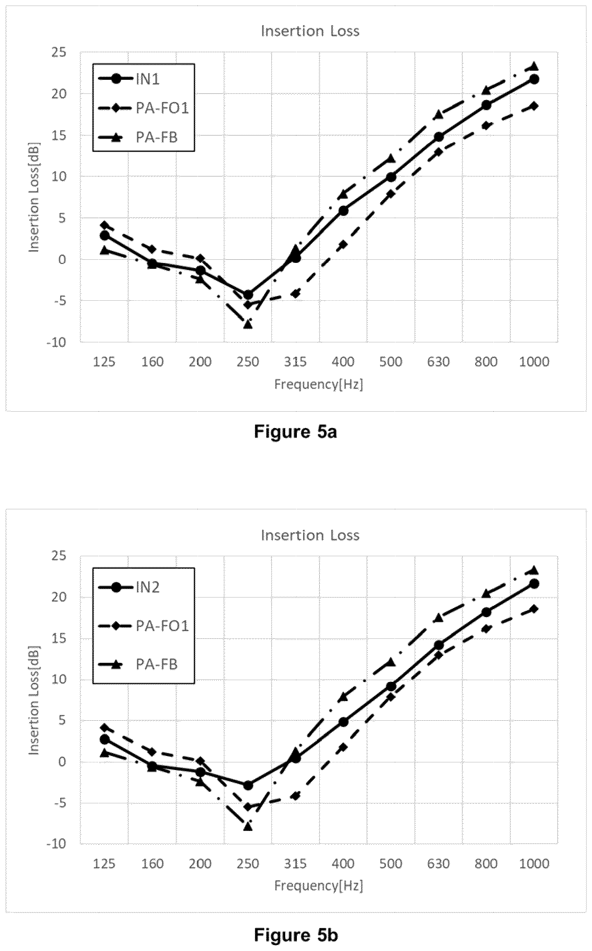

The chart in Figure 5a shows the IL of the first sound-insulating trim part according to the invention, marked with "IN1". In the same chart, two further curves are displayed: the curve marked with "PA-FO1" corresponds to the IL measured for the first prior-art sound insulating part, while the curve marked with "PA-FB" corresponds to the IL measured for the second prior-art sound insulating part. All curves are displayed as a function of the frequency in third octaves between 100Hz and 1kHz. This is considered here to be the frequency range of primary interest since it is the one relevant for SB noise and vibration and, furthermore, it is the frequency range in which the spring-mass resonance of all the concerned parts falls.

As one can see from this chart, all three concerned trim components show a spring-mass resonance at 250Hz, where their IL reaches a minimum negative value. This is an indication that the three concerned trim components have decoupling layers with a comparable dynamic stiffness. At this frequency, the IL of the first prior-art sound-insulating trim component PA-FO1 having a spring layer made with PU foam is substantially better than that of the second prior-art sound-insulating trim component PA-FB having a porous fibrous spring layer. However, above the spring-mass resonance, in particular above 400Hz, the opposite is true and the sound-insulating trim component PA-FB having a porous fibrous spring layer overperforms the one having a PU-foam spring layer PA-FO1. This situation, as mentioned in the background section, is rather common in the state of the art.

Always from the curves reported in Figure 5a it is apparent that at the spring mass resonance, the first sound-insulating trim part according to the invention IN1 has an IL which is substantially better than that of the prior-art trim part PA-FB with a porous fibrous spring layer and comparable to that of the prior-art trim part PA-FO1 with a PU-foam spring layer.

On the other hand, above the spring-mass resonance, the first sound-insulating trim part according to the invention IN1 has an IL which is better than that of the prior-art trim part with a PU-foam spring layer PA-FO1 and only slightly worse than that of the prior-art tirm part PA-FB with a porous fibrous spring layer.

Figure 5b shows results similar to those of Figure 5a, but for the second sound-insulating trim part according to the invention IN2. Similar considerations apply too: the IL curve obtained for the second sound-insulating trim part according to the invention IN2 is similar to that obtained for the first sound insulating trim part according to the invention IN1.

From all the above, it appears that the porous fibrous spring layer according to the invention combines the good sound insulation performance of a prior-art PU foam spring layer at the spring-mass resonance with that of a prior-art porous fibrous spring layer above the spring-mass resonance, a combination which allows car manufacturers not to have to resort to unwanted trade-offs, as explained in the background section.

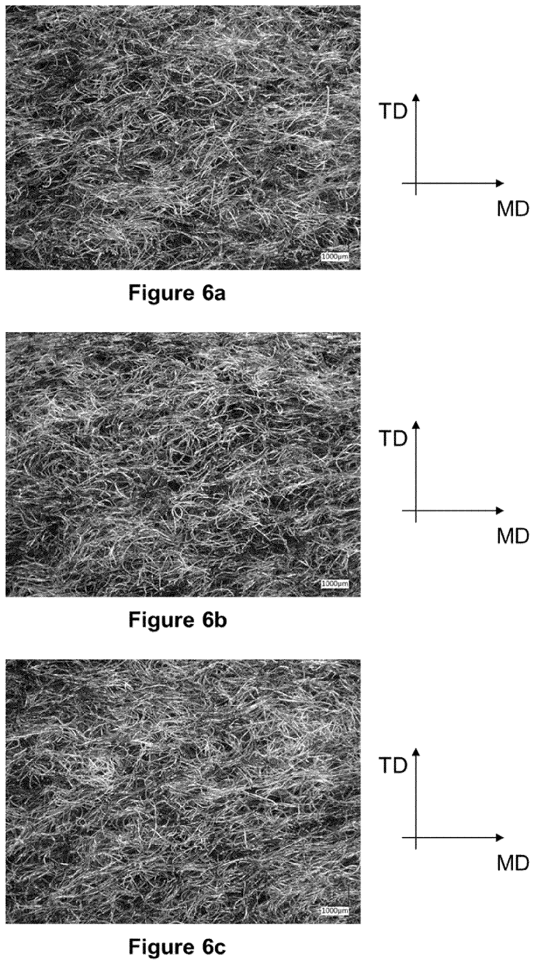

The fiber orientation of the two porous fibrous spring layers according to the invention (those corresponding to examples IN1 and IN2) was then analysed, in particular taking as observation plane the one corresponding to the MD/TD plane of the semi-finished from which it was produced. This observation plane was chosen since, due to the production process, it is the plane that may better than any other plane reveal any preferred orientation directions of the fibers. Figures 6a to 6c show pictures of the fibers of the first porous fibrous spring layer according to the invention. To obtain these pictures, a square sample with 50mm side and aligned with the Machine and Cross Directions was extracted from the first porous fibrous spring layer according to the invention. The images in Figures 6a to 6c were taken in three different areas of one of the two side faces of the sample aligned with the MD/TD plane (as indicated in the Figures). Pictures were taken with a Keyence VHX-5000 microscope, using a 20x magnification factor. Visual inspection of these pictures does not indicate any preferential orientation for the fibers.

The FOD and the FOS were calculated from the three pictures shown in Figures 6a to 6c using the "directionality" function of the open source software ImageJ (method based on Fourier components), version 1.54j released on June 24th, 2024. The three pictures in Figures 6a to 6c provide very similar FODs as shown by the chart in Figure 7 as a function of the orientation angle from -90degrees to +90degrees, with a step of about 2degrees. In this Figure, the FOD is shown taking as reference the horizontal direction (corresponding to 0degrees), which corresponds also to the MD. As previously described, the peak appearing in each FOD was best-fit with a Gaussian distribution, whose mean and standard deviation, corresponding to the Fibers Orientation Scattering, is shown in Table 1. As one can see from this table, the FOS resulting from the three images 6a to 6c ranges between about 27degrees and 29degrees.

Similar fiber orientation analyses were carried out also on the second porous fibrous spring layer according to the invention (the one corresponding to IN2), leading to very similar results (data not shown).

The CV40 of the first porous fibrous spring layer according to the invention (corresponding to IN1) was measured according to the ISO3386:1986 and resulted to be about 8.05kPa +/- 0.37kPa. The dynamic Young's modulus of the same layer was also measured in Elwis-S and resulted to be 31.2kPa+/-1.75kPa. The CV40 of the second porous fibrous spring layer according to the invention (corresponding to IN2) was measured according to the ISO3386:1986 and resulted to be about 8.75kPa +/- 1.05kPa. The dynamic Young's modulus of the same layer was also measured in Elwis-S and resulted to be 37.85kPa+/- 2.68kPa. The values indicated for the CV40 and for the dynamic Young's modulus correspond to an average over 3 samples, while the dispersion corresponds to the standard deviation.

As one can see from these values, the porous fibrous spring layers according to the invention allow achieving a very good combination of high resilience and low dynamic Young's modulus.

For comparative purposes, the CV40 of the above-described PU-foam prior-art spring layer (corresponding to PA-FO1) was measured and turned out to be only 3.71kPa +/- 0.08kPa, thus much lower than that of the porous fibrous spring layers according to the invention. This is a clear indication that, in order to obtain a comparable dynamic stiffness (and therefore a spring-mass resonance at a comparable frequency, as shown in Figure 5a) with a PU-foam decoupler, it is necessary to compromise on the resilience.

Third comparative example PA-FO2

For further confirmation, a third prior-art sound-insulating trim part was realized, using a second PU-foam spring layer produced in the same way as the first one, but increasing the mixing ratio to 0.6. It is known that an increase in the mixing ratio generally leads to an increase in the resilience properties of a PU-foam. The CV40 of this second PU-foam spring layer was measured and it resulted to be 8.57kPa +/- 0.36kPa, thus comparable to that of the porous fibrous spring layers according to the invention (i.e., those corresponding to IN1 and IN2).

After this, a third prior-art sound-insulating trim part PA-FO2 was realized by laminating on one side of this second prior-art PU-foam spring layer a barrier layer like the one previously described for the sound-insulating trim parts according to the invention IN1 and IN2. The sound Insertion Loss of PA-FO2 was measured and compared to that obtained with the sound-insulating trim parts IN1 and IN2. Results of this comparison are shown in Figure 8a for the first sound insulating part according to the invention IN1 and in Figure 8b for the second sound insulating part according to the invention IN2.

From these Figures it appears clear that the third prior art sound-insulating trim part PA-FO2 has a much higher dynamic stiffness than the first one, leading to a much worse sound Insertion Loss. This confirms that, when PU foam decouplers are used, it is very difficult to find a good trade-off between high resilience and low dynamic stiffness, something that may be obtained with the porous fibrous spring layer according to the invention, in particular when the fibers do not show any specific preferential orientation.

Comparative example with fibers preferentially aligned in Thickness Direction

To analyze the effect of a preferential orientation in the fibers approximately in the thickness direction, a porous fibrous spring layer in the form of a flat panel with thickness approximately 20mm and obtained by compression molding a vertically lapped fibrous web was considered and pictures were taken in the same way as described above for the porous fibrous spring layers according to the invention. These are shown in Figures 9a to 9c. The FODs calculated from these images are shown in Figure 10 and, as it is clear from this Figure, they show a very evident and narrow peak, much narrower than that shown by the FODs in Figure 7. The Fibers Orientation Scattering for images 9a to 9c was calculated and turned out to be between approximately 14degrees and 15degrees, as shown in Table 2.

The CV40 and the dynamic Young's modulus of the vertically lapped porous fibrous spring layer were measured and resulted to be respectively 10.01kPa +/- 0.41kPa and 60kPa +/- 5.1kPa. This indicates that, by using fibers with a clear preferential orientation approximately in the thickness direction, a high resilience can actually be obtained, however at the price of a very substantial increase in the dynamic Young's modulus. In fact, the CV40 of the vertically oriented porous fibrous spring layer is about 20% higher than that of the porous fibrous spring layers according to the invention, while its dynamic Young's modulus is more than 50% higher than that of the porous fibrous spring layers according to the invention.

Figures 11a to 11d illustrate the procedure for the analysis of fibers orientation at a location on a porous fibrous layer. These Figures have already been described and will not be commented further.

**Claims**

1. An automotive sound-insulating trim component with spring-mass characteristics comprising a porous fibrous spring layer and a mass layer laminated together, **characterized in that** the Air Flow Resistivity of the porous fibrous spring layer is lower than 7500Ns/m$^4$ and the Damping Loss Factor of the porous fibrous spring layer is equal to or higher than 0.15.

2. Automotive sound insulating trim component according to claim 1, **characterized in that** the porous fibrous spring layer comprises at least one area such that the Fibers Orientation Scattering at any location comprised **in that** area is greater than 15 degrees, more preferably greater than 25degrees, wherein the Fibers Orientation Scattering at a location on the porous fibrous spring layer is obtained as follows:

   - a square sample of the porous fibrous spring layer around the location is cut, wherein the size of the sample is substantially smaller than that of the porous fibrous spring layer and the orientation of the fibers within the sample is substantially homogeneous;
   - at least three magnified images are taken from each side face of the sample, wherein the magnification factor is suitable for the resolution of the individual fibers;
   - for each image, the corresponding Fibers Orientation Scattering is calculated using image-processing techniques such as those based on Fourier component analysis;
   - for each side face, the Fibers Orientation Scattering values obtained from images taken from that face are averaged;
   - the minimum of the Fibers Orientation Scattering values so obtained for the side faces is taken.

3. Automotive sound inslating trim component according to claim 2, **characterized in that** said area is at least 10% of the total area of the porous fibrous spring layer, preferably at least 20%, more preferably at least 30%.

4. Automotive sound-insulating trim component according to any of the preceding claims, **characterized in that** the porous fibrous spring layer is obtained by compression molding a flat semi-finished layer obtained from a web-forming process and featuring a Machine Direction aligned with the direction in which the semi-finished layer is produced in the web-forming process and a Cross Direction, which is normal to the Machine Direction in the plane of the flat semi-finished layer.

5. Automotive sound insulating trim component according to claim 4, wherein the semi-finished layer comprises at least one area such that the Fibers Orientation Scattering at any location comprised in that area is greater than 15 degrees, more preferably greater than 25degrees, wherein the Fibers Orientation Scattering at a location on the semi-finished layer is obtained as follows:

   - a square sample of the semi-finished layer around the location is cut, wherein the sides of the sample are aligned with the Machine and the Cross Directions and wherein the size of the sample is substantially smaller than that of the semi-finished layer and the orientation of the fibers within the sample is substantially homogeneous;

- at least three magnified images are taken from each side face of the sample, wherein the magnification factor is suitable for the resolution of the individual fibers;
- for each image, the corresponding Fibers Orientation Scattering is calculated using image-processing techniques such as those based on Fourier component analysis;
- for each side face, in particular for the side faces aligned with the Machine Direction, the Fibers Orientation Scattering values obtained from images taken from that face are averaged;
- the minimum of the Fibers Orientation Scattering values so obtained for the side faces is taken.

6. Automotive sound-insulating trim component according to any of the preceding claims, **characterized in that** the dynamic Young's modulus of the porous fibrous spring layer is lower than 80kPa, preferably lower than 55kPa, even more preferably lower than 40kPa.

7. Automotive sound insulating trim component according to any of the preceding claims, **characterized in that** the porous fibrous spring layer has a value of CV40 measured according to ISO3386:1986 of at least 4kPa, preferably at least 6kPa, more preferably at least 8kPa.

8. Automotive sound-absorbing trim component according to any of the preceding claims, **characterized in that** the area weight of the porous fibrous spring layer is between 400g/m$^2$ and 3000g/m$^2$, preferably between 600g/m$^2$ and 2000g/m$^2$, more preferably between 800g/m$^2$ and 1600g/m$^2$.

9. Automotive sound-insulating trim component according to any of the preceding claims, **characterized in that** the thickness of the porous fibrous spring layer is between 1mm and 80mm, preferably between 3mm and 40mm, more preferably between 5mm and 30mm.

10. Automotive sound-insulating trim component according to any of the preceding claims, **characterized in that** the porous fibrous spring layer comprises natural fibers such as cotton, wool, flax, hemp, bamboo, sisal, jute, abaca and/or synthetic fibers such as polypropylene fibers, polyethylene fibers, polyester fibers, in particular polyethylene-terephthalate (PET) fibers, polylactic acid (PLA) fibers and polyamide (PA) fibers, in particular polyamide 6 or polyamide 6.6 fibers and/or mineral fibers such as glass fibers or ceramic fibers.

11. Automotive sound-insulating trim component according to any of the preceding claims, **characterized in that** the mass layer consists of an acoustic barrier layer with an area weight between 500g/m$^2$ and 10000g/m$^2$, preferably between 1500g/m$^2$ and 5000g/m$^2$, more preferably 2000g/m$^2$ and 3500g/m$^2$.

12. Automotive sound-insulating trim component according to any of claims 1 to 10, **characterized in that** the mass layer consists of a porous fibrous mass layer having an Air Flow Resistivity between 35000Ns/m$^4$ and 1200000Ns/m$^4$, preferably between 60000Ns/m$^4$ and 800000Ns/m$^4$, more preferably between 90000Ns/m$^4$ and 400000Ns/m$^4$, an area weight between 200grams/m$^2$ and 2000grams/m$^2$, preferably between 400grams/m$^2$ and 1600grams/m$^2$, more preferably between 800grams/m$^2$ and 1400grams/m$^2$ and a thickness which is less than 70%, preferably less than 50%, more preferably less than 30% of the thickness of the porous fibrous spring layer.

13. Automotive sound insulating trim component according to any of claims 1 to 10, characteirzed in that the mass layer comprises a porous fibrous mass layer and an air-impervious film laminated together, wherein the film is laminated onto the porous fibrous spring layer and wherein the out-of-plane dynamic Young's modulus of the porous fibrous mass layer is at least 96*AW*t, with AW the area weight of the porous fibrous mass layer in grams/m$^2$ and t the thickness of the porous fibrous mass layer in mm.

14. Automotive sound insulating trim component according to any of claims 1 to 10, **characterized in that** the mass layer comprises a porous fibrous mass layer and an acoustic barrier layer laminated together, wherein the acoustic mass layer is laminated onto the porous fibrous spring layer and wherein the out-of-plane dynamic Young's modulus of the porous fibrous mass layer is at least

$$118 \cdot t_p \cdot \frac{AW_b \cdot AW_p + \frac{AW_p^2}{4}}{AW_p + AW_b}$$

, wherein $t_p$ is the thickness of the porous fibrous mass layer in mm, $AW_b$ is the area weight of the acoustic barrier layer in grams/m$^2$ and $AW_p$ is the area weight of the porous fibrous mass layer in grams/m$^2$.

15. Sound insulating trim part according to any of claims 1 to 10 **characterized in that** the mass layer comprises a porous fibrous mass layer and an air-permeable foil laminated together, wherein the air-permeable foil is laminated onto the porous fibrous spring layer.

16. Sound insulating trim part according to claim 15, **characterized in that** the sound insulating trim part is porous and the Air Flow Resistance of the mass layer is at least 55%, preferably between 65% and 80%, of the total Air Flow Resistance of the trim part.

17. Sound insulating trim part according to any of the preceding claims, **characterized in that** the mass layer comprises a decorative layer such as a carpet layer, in particular a needle-punched carpet or a tufted carpet, and/or a textile layer and/or a thermoplastic polyolefin surface layer.

18. Use of the sound insulating trim part according to any of the preceding claims as an automotive flooring part, an automotive cladding part, an inner or outer dash, a engine trim part, a battery trim part, or trunk trim part or a trunk flooring part.

**Figure 1**

**Figure 2**

**Figure 3**

**Figure 4**

**Figure 5a**

**Figure 5b**

Figure 6a

Figure 6b

Figure 6c

**Figure 7**

| Image | Mean(deg) | FOS(deg) |
|:-----:|:---------:|:--------:|
| 6a | 12 | 29 |
| 6b | 12 | 29 |
| 6c | 12 | 27 |

**Table 1**

**Figure 8a**

**Figure 8b**

Figure 9a

Figure 9b

Figure 9c

**Figure 10**

| Image | Mean(deg) | FOS(deg) |
|-------|-----------|----------|
| 9a    | 76        | 14       |
| 9b    | 76        | 14       |
| 9c    | 75        | 15       |

**Table 2**

**Figure 11a**

**Figure 11b**

**Figure 11c**

**Figure 11d**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/034414 A1 (ARATA MITSUAKI [JP] ET AL) 5 February 2015 (2015-02-05) | 1,8-11, 13 | INV.<br>B32B5/02 |
| A | * paragraphs 2, 6, 13, 45, 54, 55, 60, 61, 66, 67 * | 2-7,12, 14-17 | B32B5/08<br>B32B25/02<br>B32B25/10 |
| A | US 2018/158444 A1 (THOMPSON JR DELTON R [US] ET AL) 7 June 2018 (2018-06-07)<br>* paragraph 36 * | 1-18 | B32B25/14<br>B60R13/01<br>B60R13/02<br>B60R13/08 |
| A | US 2009/038881 A1 (FUKUHARA CHIE [JP] ET AL) 12 February 2009 (2009-02-12)<br>* paragraph 78 * | 1-18 | ADD.<br>B60N3/04 |
| T | KALAUNI KISHOR ET AL: "A review on the taxonomy, factors associated with sound absorption and theoretical modeling of porous sound absorbing materials",<br>JOURNAL OF POROUS MATERIALS, SPRINGER US, NEW YORK,<br>vol. 26, no. 6, 14 June 2019 (2019-06-14), pages 1795-1819, XP037190912,<br>ISSN: 1380-2224, DOI:<br>10.1007/S10934-019-00774-2<br>[retrieved on 2019-06-14]<br>* the whole document * | | |

**TECHNICAL FIELDS SEARCHED (IPC)**

B32B
B60R
B60N

The present search report has been drawn up for all claims

| Place of search | Date of completion of the search | Examiner |
|---|---|---|
| The Hague | 16 January 2025 | Barenbrug, Theo |

EPO FORM 1503 03.82 (P04C01)

**EP 4 686 559 A1**

## ANNEX TO THE EUROPEAN SEARCH REPORT
## ON EUROPEAN PATENT APPLICATION NO.

EP 24 19 2745

This annex lists the patent family members relating to the patent documents cited in the above-mentioned European search report.
The members are as contained in the European Patent Office EDP file on
The European Patent Office is in no way liable for these particulars which are merely given for the purpose of information.

16-01-2025

| Patent document cited in search report | Publication date | Patent family member(s) | Publication date |
|---|---|---|---|
| US 2015034414 A1 | 05-02-2015 | CN 104395954 A | 04-03-2015 |
| | | EP 2871637 A1 | 13-05-2015 |
| | | US 2015034414 A1 | 05-02-2015 |
| | | WO 2014006896 A1 | 09-01-2014 |
| US 2018158444 A1 | 07-06-2018 | BR PI0713217 A2 | 03-04-2012 |
| | | CN 101484335 A | 15-07-2009 |
| | | EP 2035259 A1 | 18-03-2009 |
| | | JP 5329400 B2 | 30-10-2013 |
| | | JP 2009542504 A | 03-12-2009 |
| | | KR 20090024200 A | 06-03-2009 |
| | | US 2008001431 A1 | 03-01-2008 |
| | | US 2018158444 A1 | 07-06-2018 |
| | | WO 2008005728 A1 | 10-01-2008 |
| US 2009038881 A1 | 12-02-2009 | EP 2022678 A2 | 11-02-2009 |
| | | JP 5056248 B2 | 24-10-2012 |
| | | JP 2009040071 A | 26-02-2009 |
| | | US 2009038881 A1 | 12-02-2009 |

EPO FORM P0459

For more details about this annex : see Official Journal of the European Patent Office, No. 12/82

29

**EP 4 686 559 A1**

**Patent documents cited in the description**

- EP 2159786 A
- US 6534145 B
- EP 2365483 A
- EP 2684187 A